# FASCICULE DE BREVET EUROPEEN

(11) **EP 1 918 144 B1**
(45) Date de publication et mention de la délivrance du brevet: **07.07.2010**
(21) Numéro de dépôt: 07119320.5
(22) Date de dépôt: 25.10.2007
(51) Int. Cl.: B60J 5/10

(54) **Module d'une porte arrière d'un véhicule automobile**
Heckklappenmodul für ein Kraftfahrzeug
Tailgate module for an automobile

(30) Priorité: 27.10.2006 FR 0654617
(43) Date de publication de la demande: 07.05.2008
(73) Titulaire: Compagnie Plastic Omnium, 69007 Lyon (FR)
(72) Inventeur: André, Gérald, 01500 Ambérieu en Bugey (FR); Amorin, Guilherme, 01150 Chazey sur Ain (FR); Fillon, Jérôme, 69003 Lyon (FR); Delwal, Fabien, 01320 Chalamont (FR); Barral, Denis, 38390 Montalieu Vercieu (FR)
(74) Mandataire: Thiollier, Clémence-Olivia Laure Marie

(56) Documents cités:
- DE-A1- 2 932 047
- FR-A1- 2 764 551
- US-A- 4 880 267
- US-A1- 2003 015 884
- US-A1- 2003 214 148

## Description

La présente invention concerne un module arrière destiné à être rapporté sur un véhicule automobile.

On connaît déjà dans l'état de la technique, notamment dans US 2003/01214148, un module arrière comportant un petit ouvrant, portant une vitre arrière, délimité par un petit cadre, ce cadre comportant notamment deux montants latéraux, le contour de chaque montant étant inscrit dans une enveloppe ayant une première épaisseur. Le module comporte également un grand ouvrant, sur lequel est rapporté le petit ouvrant, délimité par un grand cadre comportant notamment deux montants , le contour de chaque montant étant inscrit dans une enveloppe ayant une deuxième épaisseur. Sur ce module arrière, les montants de chacun des ouvrants sont superposés l'un à l'autre, de façon que l'ensemble des montants superposés soit inscrit dans une enveloppe dont l'épaisseur est égale à la somme des première et deuxième épaisseurs.

Le grand ouvrant est composé d'un hayon, monté pivotant autour d'un axe horizontal situé près du toit du véhicule, et le petit ouvrant est une lunette, également montée pivotante autour d'un axe horizontal situé près du toit du véhicule. Cette lunette permet d'accéder à la partie supérieure du coffre, que l'on peut appeler compartiment de vision, située au-dessus d'une plage arrière, ce compartiment étant généralement libéré sur le véhicule pour permettre la rétrovision du conducteur. Le hayon quant à lui obture l'ensemble du coffre, plus précisément une ouverture constituée par l'anneau arrière de la caisse du véhicule.

L'idée de rapporter un petit ouvrant sur un grand ouvrant est particulièrement intéressante pour l'utilisateur, mais pose néanmoins un problème de compacité. En effet, le fait de superposer deux ouvrants augmente inévitablement l'épaisseur du module arrière dans la direction longitudinale du véhicule. En outre, la présence du petit ouvrant peut créer une surépaisseur sur le grand ouvrant, ce qui nuit à l'aspect extérieur du véhicule.

Or, on sait que chacun des ouvrants a une surface relativement grande, et que chaque ouvrant n'étant généralement fixé à la caisse du véhicule que par l'intermédiaire de deux charnières, il est nécessaire qu'ils présentent chacun une certaine raideur, en particulier pour éviter les déformations par torsion lorsqu'on les manipule ouverts, notamment lorsqu'on les ferme en exerçant une force sur un côté plutôt qu'au centre.

La présente invention vise notamment à fournir un module arrière comportant deux ouvrants, tout en étant suffisamment rigide et particulièrement compact dans la direction longitudinale du véhicule.

A cet effet, l'invention a pour objet un module arrière destiné à être rapporté sur un véhicule automobile, comportant :
- un grand ouvrant destiné à être monté pivotant autour d'un axe, délimité dans une direction parallèle à cet axe par deux montants rigidifiants ayant tous les deux une section transversale dont l'épaisseur, prise perpendiculairement à l'ouvrant, est au maximum égale à une première épaisseur, ce grand ouvrant ayant une ouverture s'étendant jusqu'auxdits montants dans la direction parallèle à l'axe,
- un petit ouvrant, monté sur le grand ouvrant, mobile entre une position ouverte libérant ladite ouverture et une position fermée obturant ladite ouverture, délimité dans la direction parallèle à l'axe par deux montants rigidifiants ayant tous les deux une section transversale dont l'épaisseur, prise perpendiculairement à l'ouvrant, est au maximum égale à une deuxième épaisseur, les montants du petit ouvrant recouvrant les montants du grand ouvrant en position fermée du petit ouvrant,
caractérisé en ce que les montants du petit ouvrant et les montants du grand ouvrant sont conformés de manière à s'emboîter deux à deux lorsque le petit ouvrant est en position fermée, de façon à avoir une épaisseur maximale, prise perpendiculairement à l'ouvrant, inférieure à la somme des première et deuxième épaisseurs.

Dans la présente description, on entend par « montant rigidifiant » un montant qui apporte de la rigidité à l'ouvrant. A cet effet, le montant présente une certaine épaisseur qui lui confère une certaine inertie et, en conséquence, une certaine résistance au flambement dans une direction perpendiculaire à l'axe de l'ouvrant.

Selon l'invention, les montants de chacun des ouvrants ne sont pas seulement superposés, mais emboîtés. Grâce à cet emboîtement, les montants ont une épaisseur dans la direction longitudinale du véhicule inférieure à celles qu'ils auraient s'ils étaient superposés l'un sur l'autre, correspondant à l'addition de l'épaisseur de chacun des hayons, ce qui diminue l'encombrement du module arrière dans la direction longitudinale du véhicule. De façon avantageuse, cette épaisseur des montants lorsqu'ils sont superposés est quasiment identique à l'épaisseur d'un seul de ces montants, ce qui diminue considérablement l'encombrement.

Par ailleurs, on notera que, comme les montants sont superposés dans la direction longitudinale, la présence de deux ouvrants arrières sur le véhicule n'a pas d'impact sur la visibilité du conducteur offerte par la vitre arrière, à la différence d'un module où les montants seraient juxtaposés dans la direction transversale du véhicule.

En conséquence, on obtient grâce à l'invention un module arrière comportant deux ouvrants, mais présentant sensiblement la même épaisseur qu'un module arrière comprenant un seul ouvrant.

Le module arrière selon l'invention peut en outre comporter l'une ou plusieurs des caractéristiques suivantes.
- Les montants du petit ouvrant et du grand ouvrant comprennent chacun une section en U dont l'ouverture est tournée vers l'intérieur ou vers l'extérieur du véhicule, les sections en U étant emboîtées deux à deux.
- Le petit ouvrant comporte une vitre arrière et au moins un bord extérieur de chaque montant du petit ouvrant est fixé à la vitre arrière, de façon à combiner sa rigidité à celle de la vitre. Dans le cas d'un montant à section en U dont l'ouverture est tournée vers la vitre, le montant définit un corps creux fermé par la vitre et apporte une rigidité particulièrement bonne. Dans cette variante, soit les deux bords extérieurs du montant sont fixés à la vitre, ce qui fournit un vrai corps creux et confère à l'ensemble une rigidité optimale, soit un seul des deux bords extérieurs est fixé sur la vitre, ce qui définit un corps creux presque fermé, mais présente l'avantage que la fixation sur la vitre arrière est plus facile à réaliser. La fixation du ou des bords extérieurs se fait de préférence par collage sur la vitre arrière.
- Le module comprend un premier joint d'étanchéité agencé entre chaque montant latéral du petit ouvrant et le montant latéral du grand ouvrant avec lequel il est emboîté, ce premier joint étant destiné à être en regard d'un second joint d'étanchéité agencé sur la caisse du véhicule. Ce mode de réalisation est particulièrement avantageux, du fait que les deux joints d'étanchéité sont disposés dans un même plan selon la direction longitudinale du véhicule. Il en ressort que, lors du claquage des ouvrants pour leur fermeture, les forces exercées par ces deux points sur les montants du grand ouvrant sont, en section, coaxiales et de sens opposés, de sorte qu'elles se compensent et, surtout, n'engendrent pas de couple de rotation sur lesdits montants. Les montants du grand ouvrant sont ainsi protégés du risque de se déformer par torsion.
- Le petit ouvrant est davantage résistant à la torsion que le grand ouvrant. Ainsi, alors que, dans l'état de la technique, le grand ouvrant est particulièrement rigide et constitue en quelque sorte le porteur du petit ouvrant, les inventeurs à la base de l'invention ont eu l'idée de réaliser un petit ouvrant qui devient paradoxalement porteur du grand ouvrant. En effet, comme le grand ouvrant peut être monté de façon à n'être ouvert que dans le cas où il est verrouillé avec le petit ouvrant, ce grand ouvrant peut bénéficier de la rigidité du petit ouvrant et apparaître rigide, lors de sa manoeuvre, sans avoir besoin d'être, de façon autonome, d'une grande rigidité. En d'autres termes, tout se passe comme si le petit ouvrant, apportant la rigidité au grand ouvrant, constituait un insert rigide intégré au grand ouvrant.

On notera qu'une manière de déterminer la résistance à la torsion d'un ouvrant pivotant autour d'un axe de pivotement est de lui imprimer, en position ouverte, un couple de rotation selon un axe perpendiculaire à et passant par son axe de pivotement. De façon plus concrète, la mesure peut s'effectuer sur l'ouvrant en position horizontale en appliquant une force dirigée vers le bas sur un coin de l'ouvrant et la même force dirigée vers le haut sur l'autre coin de l'ouvrant.

Ainsi, pour comparer la résistance à la torsion du petit ouvrant à celle du grand ouvrant, on répète cette opération successivement sur le petit ouvrant seul, le grand ouvrant étant fermé, puis sur le grand ouvrant seul, le petit ouvrant étant ouvert, de manière qu'il ne joue pas le rôle précédemment expliqué d'insert rigide intégré au grand ouvrant, mais en appliquant les forces non pas sur les coins du grand ouvrant mais sur ses montants latéraux, à la hauteur des coins du petit ouvrant lorsqu'il est fermé.

On relève dans chaque cas la déformation obtenue pour une force donnée, ou inversement la force requise pour atteindre une déformation donnée, et on en déduit lequel des deux ouvrants est le plus rigide.
- Le petit ouvrant comporte un premier panneau de carrosserie opaque s'étendant sur toute sa largeur et le grand ouvrant comporte un second panneau de carrosserie, prolongeant le premier panneau. Une telle configuration des petit et grand ouvrants est particulièrement utile dans le cas où le véhicule comporte un plancher intermédiaire agencé entre le plancher inférieur et la plage arrière du véhicule, puisque le petit ouvrant obture non seulement le compartiment de vision du véhicule, mais également un compartiment intermédiaire situé entre la plage arrière et le plancher intermédiaire.
- Les montants du grand ouvrant comprennent, sur leur face intérieure, des moyens de centrage par rapport à l'anneau arrière de caisse du véhicule. De tels moyens permettent de positionner le grand ouvrant, au moment de son montage sur la caisse du véhicule. En outre, ces moyens de centrage constituent un relief supplémentaire augmentant l'inertie des montants .
- Les montants des ouvrants sont réalisés en matière plastique, thermoplastique ou thermodurcissable. Grâce à l'emboîtement des montants , la rigidité est satisfaisante et il n'est pas indispensable d'utiliser des ouvrants en métal.

L'invention a également pour objet un lot de deux modules arrières aptes à être rapportés sur même véhicule automobile, l'un des modules étant une module à deux ouvrants tel que défini ci-dessus, l'autre module comportant un unique ouvrant, lequel unique ouvrant est délimité, dans la direction parallèle à l'axe, par deux montants rigidifiants ayant tous les deux une section transversale totale constituée par une partie principale et une partie additionnelle, la partie principale étant identique à la section transversale des montants du grand ouvrant du module à deux ouvrants et la partie additionnelle étant conformée de manière à augmenter l'épaisseur de la section transversale totale, prise perpendiculairement à l'ouvrant, de manière que cette épaisseur soit égale à l'épaisseur maximale de deux montants emboîtés du module à deux ouvrants.

Grâce à ce lot, il est possible de fabriquer un grand ouvrant qui soit utilisable à la fois sur un véhicule comportant un unique ouvrant et un véhicule comportant deux ouvrants, à savoir le grand et le petit ouvrant tels que décrits ci-dessus. Ce lot permet d'utiliser un même moule pour fabriquer aussi bien les montants du grand ouvrant que ceux du module à unique ouvrant en ayant juste besoin, dans le cas où le véhicule comporte deux ouvrants, de reprendre légèrement le montant, en éliminant la partie additionnelle de sa section transversale. On peut ainsi fabriquer des grands ouvrants de forme standard, sans avoir à prévoir des moules différents selon que le grand ouvrant est destiné à recevoir un petit ouvrant ou pas.

Dans un mode de réalisation particulier, les montants de l'ouvrant du module à unique ouvrant comportent des nervures de rigidification dans la partie principale de la section transversale. Dans ce cas, l'opération de reprise du montant pour en faire un montant d'un grand ouvrant d'un module à deux ouvrants, consiste aussi à éliminer les nervures, ou une partie de celles-ci, par exemple par découpe, fraisage ou usinage.

L'invention sera mieux comprise à la lecture de la description qui va suivre, donnée uniquement à titre d'exemple en se référant aux dessins dans lesquels :
- la figure 1 est une vue schématique en coupe d'un véhicule automobile comportant un module arrière selon l'invention ;
- la figure 2 est une vue schématique en perspective éclatée du véhicule de la figure 1 ;
- la figure 3 est une vue schématique en coupe du module arrière de la figure 1, selon un plan de coupe passant par les montants des ouvrants ;
- la figure 4 est une vue schématique en coupe de dessus d'une partie du module de la figure 1, les deux ouvrants étant en position fermée ; et
- le figure 5 est une vue similaire à la figure 4 d'un module arrière à unique ouvrant appartenant à un lot selon un mode de réalisation de l'invention.

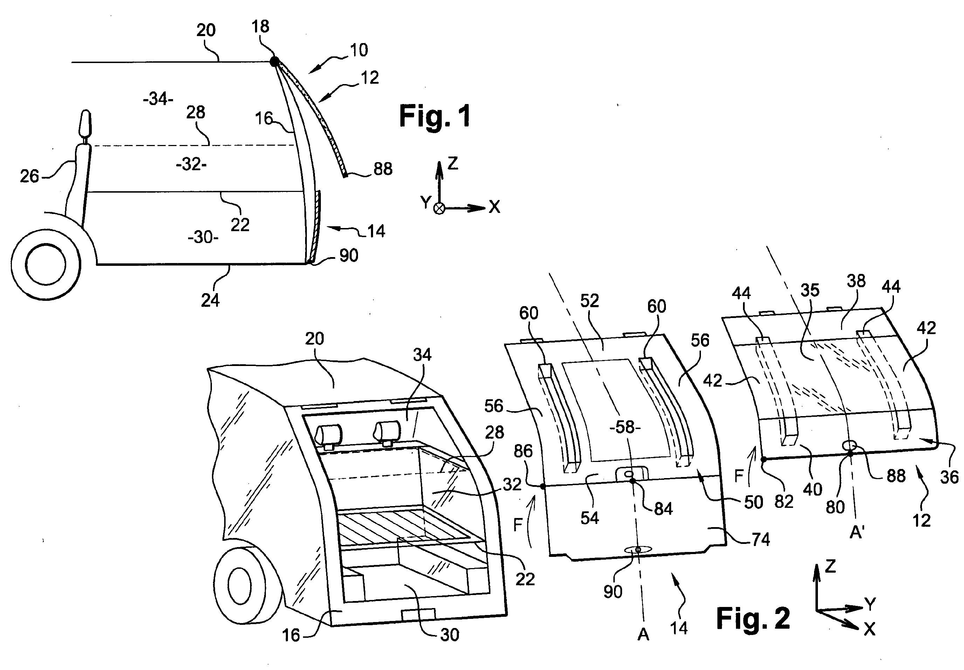

Comme on peut le voir sur la figure 1, un module arrière 10 comprend un petit ouvrant 12 et un grand ouvrant 14.

Le petit ouvrant 12 est rapporté sur le grand ouvrant 14, le tout étant rapporté sur l'anneau arrière 16 de la caisse d'un véhicule, chaque ouvrant étant monté pivotant autour d'un axe commun horizontal 18 agencé près du toit 20 du véhicule, éventuellement de façon motorisée.

Le petit ouvrant 12 s'étend sur le véhicule depuis le toit 20 du véhicule, jusqu'à un plancher intermédiaire 22. Ce plancher intermédiaire 22 est agencé au-dessus du plancher inférieur de coffre 24 du véhicule, et a une hauteur inférieure à la hauteur des dossiers de sièges arrières 26 du véhicule. On notera que cette hauteur correspond à l'extrémité supérieure des sièges ou d'une banquette arrière, sans tenir compte des appuie-tête. Plus précisément, dans ce mode de réalisation, le véhicule comprend une plage arrière 28, située à la hauteur supérieure des sièges arrière 26, et le plancher intermédiaire 22 est agencé en-dessous de cette plage arrière 28. Ce plancher intermédiaire 22 sépare le coffre du véhicule en deux compartiments, à savoir un compartiment inférieur 30, délimité par le plancher inférieur 24, le plancher intermédiaire 22, et la partie inférieure du grand ouvrant 14, et un compartiment supérieur. Ce compartiment supérieur est lui-même séparé en deux compartiments, à savoir un compartiment intermédiaire 32, délimité par le plancher intermédiaire 22, la plage arrière 28 et la partie inférieure du petit ouvrant 12, et un compartiment dit de vision 34, délimité par la plage arrière 28, le toit 20 et la partie supérieure du petit ouvrant 12.

Comme on peut le voir sur la figure 1, le petit ouvrant 12 porte une vitre arrière 35 et est délimité par un cadre appelé petit cadre 36, comportant un bord horizontal supérieur 38, un bord horizontal inférieur 40 et deux montants similaires 42.

Il convient de noter que la notion de cadre utilisée ici ne présente aucun caractère limitatif. En particulier, il n'est pas nécessaire, selon l'invention, qu'il existe un cadre proprement dit pour que des montants soient présents sur l'ouvrant.

Le bord inférieur 40 a la forme d'une bande, de largeur supérieure à la largeur des autres bords du cadre 36, constituant ou sur lequel on peut rapporter une pièce de carrosserie visible depuis l'extérieur du véhicule. Ce bord inférieur obture le compartiment intermédiaire du coffre lorsque le petit ouvrant est fermé, et donne accès à ce compartiment intermédiaire dans le cas contraire.

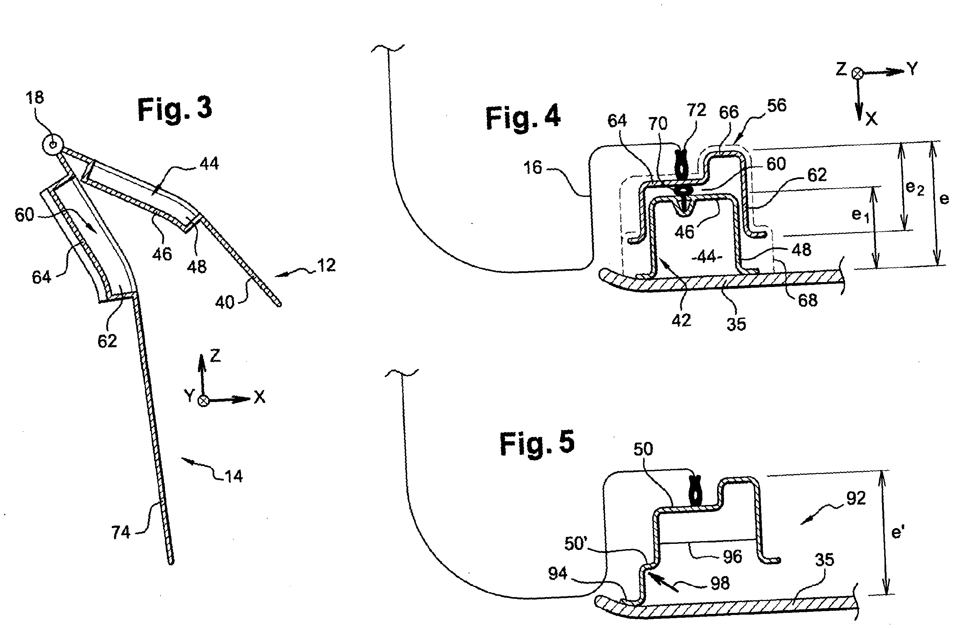

Chacun des montants 42 du petit ouvrant 12 comprend une chambre 44 s'étendant sur toute la longueur du montant, à section en U, dont l'ouverture est tournée vers l'extérieur du véhicule. Comme on peut le voir sur la figure 4, cette chambre 44 est délimitée par un fond 46 et deux parois 48 s'étendant dans la même direction que le montant latéral 42, à savoir sensiblement la direction Z, dans le plan (X ; Z) perpendiculaire au plan de la vitre arrière 35. Chacune des parois 48 comporte un bord du côté de l'extérieur du véhicule, prolongé par un rebord appliqué contre la vitre 35 et fixé par collage. Ainsi, la chambre 44 définit un corps creux particulièrement rigide pour augmenter la résistance à la torsion du petit ouvrant 12.

Comme on peut le voir sur la figure 2, le grand ouvrant 14, sur lequel est rapporté le petit ouvrant 12, est délimité par un grand cadre 50, réalisé en matière thermodurcissable, telle que du SMC, en composite, ou en matériau hybride. Ce cadre 50 comprend un bord horizontal supérieur 52, un bord horizontal inférieur 54 et deux montants 56, l'ensemble de ces bords et montants délimitant une ouverture 58, permettant de libérer la vitre arrière 35 pour que le conducteur puisse voir à travers, cette ouverture 58 ayant en outre une hauteur supérieure à la vitre arrière 35, puisqu'elle s'étend davantage vers le bas du véhicule, afin de donner accès au compartiment intermédiaire tout en diminuant au maximum le poids du grand cadre 50. Comme on peut le voir sur la figure 2, le grand cadre 50 porte un panneau de carrosserie 74, soit venu de matière avec le grand cadre 50, soit rapporté par dessus ce grand cadre ou en dessous du rebord 54.

Chaque montant latéral 56 du grand ouvrant 14 comporte, de la même façon que les montants 42 du petit ouvrant 12, une chambre 60 à section en U dont l'ouverture est tournée vers l'extérieur du véhicule, configurée de façon à pouvoir s'emboîter avec les chambres correspondantes 44. Comme on peut le voir sur la figure 4, la chambre 60 est délimitée par deux parois 62 s'étendant dans la même direction que les parois 48, et par un fond 64, comportant un renfoncement 66 constituant un moyen de centrage du grand cadre par rapport à l'anneau arrière de caisse 16. Ce renfoncement 66 augmente la résistance à la torsion autour de l'axe A du grand cadre 50.

Comme les montants 42 et 56 sont emboîtables les uns dans les autres, on peut constater qu'ils sont inscrits dans une enveloppe 68 dont l'épaisseur e dans la direction longitudinale X est inférieure à la somme des épaisseurs e₁ et e₂ des montants 42 et 56. Plus précisément, l'épaisseur e est quasiment égale, légèrement supérieure, à chaque épaisseur e₁ et e₂.

Comme on peut le voir sur la figure 4, chaque montant 42 porte un premier joint d'étanchéité 70, assurant l'étanchéité entre chaque montant 42 et le montant correspondant 56 du grand ouvrant, dans lequel il est emboîté. En outre, l'anneau arrière de caisse 16 porte également un deuxième joint d'étanchéité 72, assurant l'étanchéité entre chaque montant 56 et la partie correspondante de l'anneau arrière de caisse 16. Les deux joints 70, 72 sont en regard l'un de l'autre, de façon à équilibrer les pressions lors du claquage des ouvrants.

On notera que le petit ouvrant 12 est davantage résistant à la torsion que le grand ouvrant 14. En d'autres termes, lorsque le petit ouvrant 12 est en position ouverte sur le véhicule, si l'on maintient fixe un point 80 du petit ouvrant 12, situé au centre de son extrémité inférieure, passant par l'axe A' du petit ouvrant, et que l'on applique une force F sur l'une des extrémités 82 de ce bord inférieur, le petit ouvrant 12 se déforme selon un angle qui est inférieur à l'angle avec lequel se déformerait le grand ouvrant 14 s'il était maintenu au niveau d'un point 84 situé en regard du point 82 et si l'on appliquait la même force F sur son extrémité correspondante 86.

Bien entendu, on pourrait utiliser la méthode de comparaison proposée au début de la description.

Le fonctionnement du module arrière va à présent être décrit.

Deux configurations sont possibles, soit on ouvre le petit ouvrant 12, en laissant le grand ouvrant 14 solidaire de l'anneau arrière de caisse 16. Soit on ouvre le grand ouvrant 14, solidaire du petit ouvrant 12.

Pour mettre en oeuvre ces deux configurations, on utilise les serrures 88, 90 agencées respectivement sur le petit ouvrant 12 et le grand ouvrant 14. Pour ouvrir le petit ouvrant 12, on désactive la serrure 88, en laissant activée la serrure 90. Pour ouvrir le grand ouvrant 14, on active la serrure 88 et l'on désactive la serrure 90.

La figure 5 représente un grand cadre 92 monté sur un véhicule comportant un unique ouvrant arrière, mais qui aurait pu être monté sur un véhicule comportant deux ouvrants arrières tels que les ouvrants 12, 14 de la figure 4.

La section du grand cadre 92 comporte des montants composés de deux parties venues de matière, à savoir une partie principale 50, identique à celle illustrée sur les figures 2 et 4, et une partie additionnelle 50', prolongeant la partie principale 50, permettant de donner au cadre 92 l'épaisseur suffisante pour équiper un module arrière muni d'un unique ouvrant. Dans ce cas, le cadre 92 de la figure 5 est rapporté sur une vitre arrière 35, par exemple en collant l'une des extrémités 94 de ce cadre.

Des nervures 96 sont ménagées au fond de la section en U de la partie principale 50.

Si l'on souhaite utiliser ce même cadre 92 pour le rapporter sur un véhicule muni de deux ouvrants, il suffit de couper la partie additionnelle 50', à l'endroit indiqué par la flèche 98, de façon à obtenir un cadre 50 identique à celui des figures 2 et 4.

On notera que séparer les parties 50' et 50 est particulièrement facile, et moins coûteux que la réalisation de deux moules différents pour la fabrication de deux cadres spécifiques.

Parmi les avantages de l'invention, on notera que le module arrière muni des ouvrants 12, 14 est compact dans la direction X, grâce à l'emboîtement des montants.

On notera enfin que l'invention n'est pas limitée aux modes de réalisation précédemment décrits. En particulier, on pourra combiner ces exemples avec les indications données avant la description des figures. On a décrit un exemple d'emboîtement d'une partie des montants , mais il est envisageable d'emboîter les parties latérales des ouvrants sur toute leur longueur dans la direction Z, et également d'autres parties des ouvrants, telles que les bords supérieurs 38, 52 et inférieurs 40, 54.

## Revendications

1. Module arrière destiné à être rapporté sur un véhicule automobile, comportant :
- un grand ouvrant (14) destiné à être monté pivotant autour d'un axe (18), délimité dans une direction parallèle à cet axe par deux montants rigidifiants (56) ayant tous les deux une section transversale dont l'épaisseur, prise perpendiculairement à l'ouvrant, est au maximum égale à une première épaisseur (e1), ce grand ouvrant (14) ayant une ouverture (58) s'étendant jusqu'auxdits montants (56) dans la direction parallèle à l'axe,
- un petit ouvrant (12), monté sur le grand ouvrant, mobile entre une position ouverte libérant ladite ouverture (58) et une position fermée obturant ladite ouverture, délimité dans la direction parallèle à l'axe par deux montants rigidifiants (42) ayant tous les deux une section transversale dont l'épaisseur, prise perpendiculairement à l'ouvrant, est au maximum égale à une deuxième épaisseur (e2), les montants (42) du petit ouvrant recouvrant les montants (56) du grand ouvrant en position fermée du petit ouvrant,
**caractérisé en ce que** les montants (42) du petit ouvrant et les montants (56) du grand ouvrant sont conformés de manière à s'emboîter deux à deux lorsque le petit ouvrant est en position fermée, de façon à avoir une épaisseur maximale (e), prise perpendiculairement à l'ouvrant, inférieure à la somme des première et deuxième épaisseurs.

2. Module selon la revendication 1, dans lequel les montants (42, 56) du petit ouvrant et du grand ouvrant ont tous les deux une section en U (44, 60) dont l'ouverture est tournée vers l'intérieur ou vers l'extérieur du véhicule.

3. Module selon la revendication 2 ou 3, dans lequel le petit ouvrant comporte une vitre arrière (35) et au moins un bord extérieur de chaque montant du petit ouvrant est fixé à la vitre arrière.

4. Module selon l'une quelconque des revendications 1 à 4, comprenant un premier joint d'étanchéité (70) agencé entre chaque montant latéral (42) du petit ouvrant et le montant latéral (56) du grand ouvrant dans lequel il est emboîté, et destiné à être en regard avec un second joint d'étanchéité (72) agencé sur la caisse (16) du véhicule.

5. Module selon l'une quelconque des revendications 1 à 5, dans lequel le petit ouvrant (12) est davantage résistant à la torsion que le grand ouvrant (14).

6. Module selon l'une quelconque des revendications 1 à 6, dans lequel le petit ouvrant (12) comporte un premier panneau de carrosserie opaque (40) s'étendant sur toute sa largeur et le grand ouvrant (14) comporte un second panneau de carrosserie (74), prolongeant le premier panneau (40).

7. Module selon l'une quelconque des revendications 1 à 7, dans lequel les montants (56) du grand ouvrant comprennent, sur leur face intérieure, des moyens de centrage (66) par rapport à l'anneau arrière de caisse (16) du véhicule.

8. Module selon l'une quelconque des revendications 1 à 8, dans lequel les montants des ouvrants sont réalisés en matière plastique.

9. Lot de deux modules arrières aptes à être rapportés sur même véhicule automobile, l'un des modules étant une module à deux ouvrants selon l'une quelconque des revendications 1 à 8, l'autre module comportant un unique ouvrant, lequel unique ouvrant est délimité, dans la direction parallèle à l'axe, par deux montants rigidifiants (92) ayant tous les deux une section transversale totale constituée par une partie principale (50) et une partie additionnelle (50'), la partie principale (50) étant identique à la section transversale des montants (56) du grand ouvrant du module à deux ouvrants et la partie additionnelle (50') étant conformée de manière à augmenter l'épaisseur (e') de la section transversale totale, prise perpendiculairement à l'ouvrant, de manière que cette épaisseur soit égale à l'épaisseur maximale (e) de deux montants emboîtés (42, 56) du module à deux ouvrants.

## Claims

1. A rear module for fitting to a motor vehicle, the module comprising:
. a large door (14) for being pivotally mounted about an axis (18), the large door extending in a direction parallel to said axis between two stiffener uprights (56) both presenting a cross-section of maximal thickness, taken perpendicularly to the door, that is equal to a first thickness (e₁), the large door (14) having an opening (58) extending as far as said uprights (56) in the direction parallel to said axis; and
. a small door (12) mounted on the large door to move between an open position uncovering said opening (58), and a closed position closing said opening, the small door extending in the direction parallel to the axis between two stiffener uprights (42) both having a cross-section of maximal thickness, taken perpendicularly to the door, that is equal to a second thickness (e₂), the uprights (42) of the small door covering the uprights (56) of the large door when the small door is in the closed position;
the module being **characterized in that** the uprights (42) of the small door and the uprights (56) of the large door are shaped in such a manner as to engage in pairs one in another when said small door is in the closed position so as to present a maximum thickness (e) taken perpendicularly to the door, that is less than the sum of the first and second thicknesses.

2. A module according to claim 1, in which the uprights (42, 56) of the small door and of the large door are both of channel-section (44, 60) having their open faces directed towards the inside or the outside of the vehicle.

3. A module according to claim 2 or claim 3, in which the small door includes a rear window (35) and at least one outside edge of each upright of the small door is secured to the rear window.

4. A module according to any one of claims 1 to 4, including a first weather strip (70) arranged between each lateral upright (42) of the small door and the lateral upright (56) of the large door in which it is engaged, and designed to be in register with a second weather strip (72) arranged on the body (16) of the vehicle.

5. A module according to any one of claims 1 to 5, in which the small door (12) is stronger in twisting than the large door (14).

6. A module according to any one of claims 1 to 6, in which the small door (12) comprises a first bodywork panel (40) that is opaque extending over its entire width, and the large door (14) includes a second bodywork panel (74) extending the first panel (40).

7. A module according to any one of claims 1 to 7, in which the uprights (56) of the large door comprise, on their inside faces, centering means (66) for centering relative to the rear ring (16) of the vehicle body.

8. A module according to any one of claims 1 to 8, in which the uprights of the doors are made of plastics material.

9. A set of two rear modules suitable for being fitted on a same motor vehicle, one of the modules being a two-door module according to any one of claims 1 to 8, the other module having a single door, which single door extends, in the direction parallel to the axis, between two stiffener uprights (92) both presenting a total cross-section constituted by a main portion (50) and an additional portion (50'), the main portion (50) being identical to the cross-section of the uprights (56) of the large door of the two-door module, and the additional portion (50') being shaped in such a manner as to increase the thickness (e') of the total cross-section taken perpendicularly to the door in such a manner that said thickness is equal to the maximum thickness (e) of two mutually-engaged uprights (42, 56) of the two-door module.

## Patentansprüche

1. Heckmodul zur Befestigung an einem Kraftfahrzeug, wobei das Modul Folgendes umfasst:
- eine große Klappe (14), die so montiert wird, dass sie schwenkbar um eine Achse (18) ist, und die in einer Richtung parallel zu dieser Achse von zwei versteifend wirkenden Holmen (56) begrenzt wird, die beide einen Querschnitt aufweisen, dessen Dicke, senkrecht zur Klappe ermittelt, höchstens gleich einer ersten Dicke (e1) ist, wobei die große Klappe (14) eine Öffnung (58) aufweist, die sich bis zu den Holmen (56) in der Richtung parallel zur Achse erstreckt,
- eine kleine Klappe (12), die an der großen Klappe befestigt ist und zwischen einer Offenposition, die die Öffnung (58) freigibt, und einer Schließposition, die die Öffnung verschließt, bewegt werden kann und in der Richtung parallel zur Achse von zwei versteifend wirkenden Holmen (42) begrenzt wird, die beide einen Querschnitt aufweisen, dessen Dicke, senkrecht zur Klappe ermittelt, höchstens gleich einer zweiten Dicke (e2) ist, wobei in der Schließposition der kleinen Klappe die Holme (42) der kleinen Klappe die Holme (56) der großen Klappe überdecken,
**dadurch gekennzeichnet, dass** die Holme (42) der kleinen Klappe und die Holme (56) der großen Klappe so ausgestaltet sind, dass sie als Klappenpaar aneinander liegen, wenn sich die kleine Klappe in der Schließposition befindet, dergestalt, dass sie eine größtmögliche Dicke (e), senkrecht zur Klappe ermittelt, aufweist, die geringer als die Summe aus der ersten Dicke und der zweiten Dicke.

2. Modul nach Anspruch 1, in dem die Holme (42, 56) der kleinen Klappe und der großen Klappe beide einen U-förmigen Querschnitt (44, 60) aufweisen, wobei die Öffnung des U zum Inneren oder zum Äußeren des Fahrzeugs gewandt ist.

3. Modul nach Anspruch 1 oder 2, in dem die kleine Klappe eine hintere Scheibe (35) aufweist, und mindestens eine äußere Kante jedes Holmes der kleinen Klappe ist an der hinteren Scheibe befestigt.

4. Modul nach einem der Ansprüche 1 bis 3, das eine erste Dichtverbindung (70) umfasst, die jeweils zwischen dem seitlichen Holm (42) der kleinen Klappe und dem seitlichen Holm (56) der großen Klappe angebracht ist, in die sie eingepasst ist und als Bezug zu einer zweiten Dichtverbindung (72), die an der Karosserie (16) des Fahrzeugs vorgesehen ist, dient.

5. Modul nach einem der Ansprüche 1 bis 4, in dem die kleine Klappe (12) gegenüber Verdrehungen der großen Klappe (14) in hohem Maße resistent ist.

6. Modul nach einem der Ansprüche 1 bis 5, in dem die kleine Klappe (12) eine erste undurchsichtige Karosserieplatte (40) aufweist, die sich über ihre gesamte Breite erstreckt, und in dem die große Klappe (14) eine zweite Karosserieplatte (74) aufweist, die die erste Platte (40) verlängert.

7. Modul nach einem der Ansprüche 1 bis 6, in dem die Holme (56) der großen Klappe auf ihrer Innenseite Mittel zum Zentrieren (66) in Bezug auf die hintere Begrenzungskontur (16) der Fahrzeugkarosserie umfassen.

8. Modul nach einem der Ansprüche 1 bis 7, in dem die Holme der Klappen aus Kunststoff hergestellt sind.

9. Satz von zwei Heckmodulen, die an dem gleichen Kraftfahrzeug angebracht werden können, wobei es sich bei einem der Module um ein Modul mit zwei Klappen nach einem der Ansprüche 1 bis 8 handelt, und das andere Modul eine einzige Klappe aufweist, wobei die einzige Klappe in der Richtung parallel zur Achse von zwei versteifend wirkenden Holmen (92) begrenzt wird, die beide einen Gesamtquerschnitt aufweisen, der sich aus einem Hauptteil (50) und einem Zusatzteil (50') zusammensetzt, wobei der Hauptteil (50) identisch mit dem Querschnitt der Holme (56) der großen Klappe des Moduls mit zwei Klappen ist und der Zusatzteil (50') so gestaltet ist, dass er die Dicke (e') des Gesamtquerschnitts, senkrecht zur Klappe ermittelt, vergrößert, dergestalt, dass diese Dicke gleich der größtmöglichen Dicke (e) der beiden aneinander liegenden Holme (42, 56) des Moduls mit zwei Klappen ist.
